(19) Europäisches Patentamt
European Patent Office
Office européen des brevets

(11) **EP 2 193 869 B1**

(12) **EUROPEAN PATENT SPECIFICATION**

(45) Date of publication and mention
of the grant of the patent:
**17.07.2013 Bulletin 2013/29**

(51) Int Cl.:
***B23K 9/02*** *(2006.01)* ***B23K 9/173*** *(2006.01)*

(21) Application number: **09014894.1**

(22) Date of filing: **01.12.2009**

(54) **Method of gas-shield arc welding with multielectrodes oriented with particular angles**

Gasschutz-Lichtbogenschweißverfahren mit mehreren geneigten Elektroden

Procédé de soudure à l'arc sous protection gazeuse avec multi-électrodes orientées suivant des angles particuliers

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **02.12.2008 JP 2008308034**

(43) Date of publication of application:
**09.06.2010 Bulletin 2010/23**

(73) Proprietor: **Kabushiki Kaisha Kobe Seiko Sho Hyogo 651-8585 (JP)**

(72) Inventors:
• **Nagaoka, Shigeo**
**Fujisawa-shi**
**Kanagawa 251-0014 (JP)**

• **Arita, Hiroshi**
**Fujisawa-shi**
**Kanagawa 251-0014 (JP)**
• **Ehara, Susumu**
**Fujisawa-shi**
**Kanagawa 251-0014 (JP)**
• **Ito, Kazuhiko**
**Fujisawa-shi**
**Kanagawa 251-0014 (JP)**

(74) Representative: **Müller-Boré & Partner Patentanwälte**
**Grafinger Straße 2**
**81671 München (DE)**

(56) References cited:
**JP-A- 7 314 175 JP-A- 8 309 582**
**JP-A- 56 084 172 JP-A- 60 092 075**
**JP-A- 2008 055 509**

**Description**

The present invention relates to a multielectrode gas-shielded arc welding method according to the preamble of claim 1 (see, for example, JP 8/309582), using a flux-cored wire, and more particularly, to a multielectrode gas-shielded arc welding method that supplies a filler wire between multiple electrodes in multielectrode one-pool welding in which one molten pool is formed by the multiple electrodes.

To enhance efficiency of horizontal fillet welding in shipbuilding and bridge-building, one-pool welding in a multielectrode gas-shielded arc welding method has hitherto been adopted. In an actual structure, however, uniformity and stability of a molten pool that are important for welding are impaired by various disturbances, for example, (a) an excessive gap at a fillet welding portion, (b) an excessive thickness of a shop primer, and (c) current and voltage fluctuations in the plant. As a result, the arc becomes unstable, sputtering frequently occurs, the bead shape, appearance, and uniformity are worsened, and many undercuts are caused. This increases the necessity of welding for correction. Since this tendency is pronounced particularly at a welding speed of about 150 to 200 cm/min, even when the welding speed is increased, the ratio of correction increases. As a result, man-hours for welding increase substantially.

Accordingly, the present applicant has proposed a multiple gas-shielded arc welding method in which flux-cored wires for gas-shielded arc welding are used as a leading electrode and a trailing electrode, an electrode distance between the leading and trailing electrodes is set at 15 to 50 mm, a filler wire is inserted in a molten pool between the leading and trailing electrodes, and welding is performed while passing a positive current (wire minus) through the filler wire (Japanese Patent No. 3759114).

In the welding method disclosed in this publication, the filler wire is inserted as a means for reducing arc interference caused between the leading and trailing electrodes. Unfortunately, insertion of the filler wire increases the amount of welding metal. As a result, the bead tends to become convex.

The present invention has been made in view of the above-described problems, and it is an object of the present invention to provide a multielectrode gas-shielded arc welding method in which a filler wire is inserted between a leading electrode and a trailing electrode and which pronouncedly improves the bead shape, reduces arc interference caused between the leading and trailing electrodes, and allows easy installation of equipment.

According to the present invention, there is provided a multielectrode gas-shielded arc welding method according to claim 1.

Preferably, the filler-wire torch forward or backward angle γ is 0°.

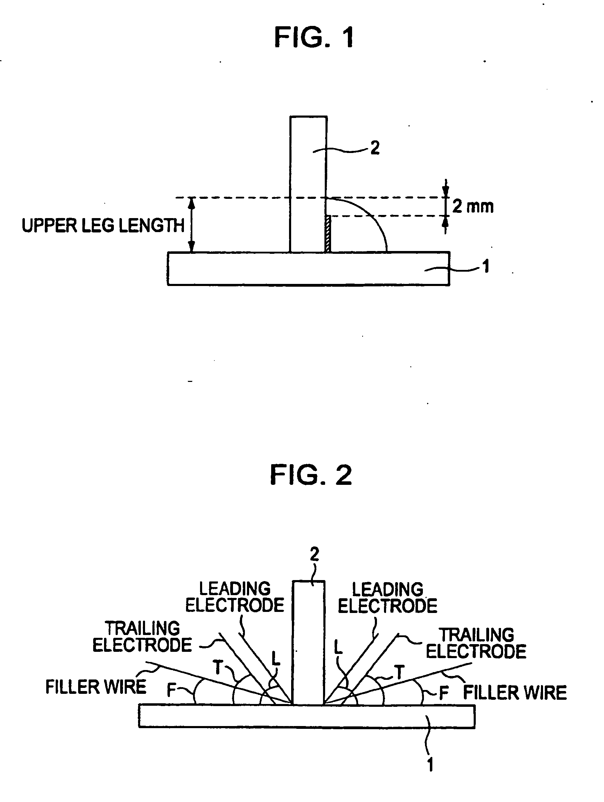

Here, the term "upper leg length" refers to a length from the lower plate to a welding terminal end, that is, an upward leg length, as shown in Fig. 1.

In the present invention, multiple electrodes include not only two electrodes, namely, the leading electrode and the trailing electrode, but also three or more electrodes. In this case, for example, the third and subsequent electrodes can be placed behind the leading electrode and the trailing electrode.

According to the present invention, the target position of the filler wire inserted to reduce arc interference is adjusted on the vertical plate within the range between the lower end of the vertical plate and the position at the height (upper leg length - 2 mm) from the lower end. Hence, a phenomenon in which a molten pool hangs down because of gravity can be minimized by positively utilizing an effect of the filler wire for cooling the molten pool. This markedly improves the bead shape.

When the filler wire is placed on the same plane as that for the leading electrode and the trailing electrode (the same torch angle) in order to obtain the arc-interference reducing effect of the filler wire, the space between the leading electrode and the trailing electrode in which the filler wire is inserted is small, and it is difficult to install equipment. In contrast, in the present invention, the torch angle F of the filler wire is set to be different from the leading-electrode horizontal angle L and the trailing-electrode horizontal angle T. Hence, even when the filler wire is not placed on the same plane as that for the leading electrode and the trailing electrode, the arc-interference reducing effect is not lessened. For this reason, according to the present invention, it is pronouncedly easy to install equipment.

Fig. 1 is a schematic front view illustrating a multielectrode gas-shielded arc welding method according to an embodiment of the present invention;
Fig. 2 is a schematic front view illustrating the welding method;
Fig. 3 is a schematic plan view illustrating the welding method; and
Fig. 4 is a schematic front view showing the bead shape.

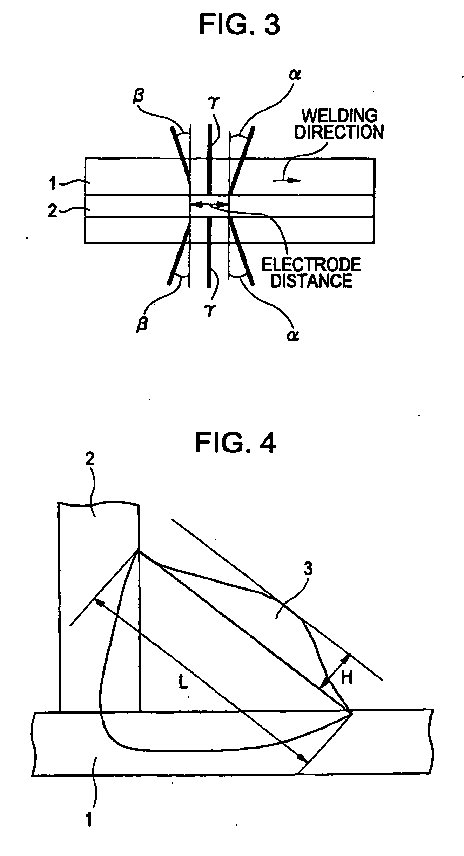

An embodiment of the present invention will be specifically described with reference to the attached drawings. Figs. 1 and 2 are schematic front views illustrating a multielectrode gas-shielded arc welding method according to the embodiment of the present invention, and Fig. 3 is a schematic plan view illustrating the welding method. Fig. 4 is a schematic front view showing the bead shape. Referring to the figures, a vertical plate 2 is perpendicularly placed on a lower plate 1 extending horizontally. Corner portions defined by the lower plate 1 and the vertical plate 2 are subjected to multielectrode gas-shielded arc welding using a plurality of welding wires. While this embodiment adopts a two-electrode welding method using a leading electrode and a trailing electrode, the number of electrodes is not limited, and three or more electrodes may be used. In this case, the third and subsequent electrodes can be placed behind the trailing electrode. In the embodiment, a filler wire is supplied into a molten pool between the leading electrode and the trailing electrode. The leading and trailing electrodes are formed by flux-cored wires for gas-shielded arc welding. Further, the filler wire can be formed by a flux-cored wire.

In this case, as shown in Fig. 3, the front leading electrode has a backward angle $\alpha$ such that a leading end thereof points backward in a welding direction in plan view. The trailing electrode has a forward angle $\beta$ such that a leading end thereof points forward in the welding direction. In plan view, a leading end of the filler wire points backward or forward in the welding direction, or is orthogonal to the welding direction. An angle between the leading end of the filler wire and a direction perpendicular to the welding direction is referred to as a filler-wire torch forward or backward angle $\gamma$ (a rear backward angle in the welding direction is a negative angle and a front forward angle in the welding direction is a positive angle). In this case, the leading electrode, the trailing electrode, and the filler wire are set so that $\alpha$, $\beta$, and $\gamma$ satisfy the following expressions:

$$4° \leq \alpha \leq 14°$$

$$5° \leq \beta \leq 15°$$

$$-5° \leq \gamma \leq 5°$$

As shown in Fig. 3, an electrode distance between the leading electrode and the trailing electrode is set at 20 to 35 mm.

Further, as shown in Fig. 2, the leading electrode, the trailing electrode, and the filler wire are set so that L, T, and F satisfy the following expressions:

$$40° \leq L \leq 60°$$

$$40° \leq T \leq 60°$$

$$X+5° \leq F \leq X+20° \quad or \quad Y-20° \leq F \leq Y-5°$$

where L represents a leading electrode horizontal angle formed by the leading electrode with the horizontal direction, T represents a trailing-electrode horizontal angle formed by the trailing electrode with the horizontal direction, and F represents a filler-wire torch angle formed by the filler wire with the horizontal direction. Here, the larger one of L and T is X, and the smaller one is Y.

In the embodiment, as shown in Fig. 1, the target position of the filler wire is within a range between a lower end of the vertical plate 2 and a position at a height of (upper leg length - 2 mm) from the lower end.

Under the above-described welding conditions, multielectrode gas-shielded arc welding is performed. Since the target position of the filler wire is set on the vertical plate 2, as shown in Fig. 1, an effect of the filler wire for cooling a molten pool can be efficiently exerted, the molten pool is prevented from hanging because of gravity, and the bead shape is improved. Even when the filler wire is not placed on the same plane as that for the leading electrode and the trailing electrode in this way, an effect of the filler wire for reducing arc interference is not lessened. Since the filler wire is not placed on the same plane as that for the leading electrode and the trailing electrode, it is easy to install welding equipment.

A description will be given below of reasons for numerical limitation in the present invention.

(1) The target position of the filler wire is within a range between a lower end of the vertical plate and a position at a height of (upper leg length - 2 mm) from the lower end

If the target position of the filler wire is higher than the position at the height of (upper leg length - 2 mm), the arc interference reducing effect decreases, the molten pool is unstable, and the bead shape and appearance are also unstable. Further, the resistance to porosity decreases, and sputtering increases. In contrast, when the target position of the filler wire is lower than the root (lower end of the vertical plate 2), the bead shape overlaps, and is not improved. This reduces the bead uniformity.

In actual welding, the target upper leg length is determined. Welding is performed under welding conditions (current, voltage, speed) selected to realize the target upper leg length, and the wire target position is determined on the basis of the target upper leg length.

(2) $X+5° \leq F \leq X+20°$ or $Y-20° \leq F \leq Y-5°$

When the filler-wire torch angle F is more than $X+20°$ or less than $Y-20°$, the melting behavior of the filler wire becomes unstable, the molten pool also becomes unstable, and good appearance and shape are not obtained. Further, the distance between the filler wire and the arc position of the leading electrode or the trailing electrode increases. This reduces the arc interference reducing effect exerted between the leading electrode and the trailing electrode, and therefore increases arc interference.

In contrast, when $Y-5° \leq F \leq X+5°$, the space in which the filler wire is inserted is small, and it is therefore difficult to install equipment.

Hence, the leading-electrode horizontal angle L, the trailing-electrode horizontal angle T, and the filler-wire torch angle F are set to satisfy any of the condition that $X+5° \leq F \leq X+20°$ or the condition that $Y-20° \leq F \leq Y-5°$.

(3) Electrode distance: 20 to 35 mm

When the electrode distance is less than 20 mm, the molten pool is unstable, the bead shape and appearance are also unstable, and the resistance to porosity decreases. Since the distance between the leading electrode and the trailing electrode is short, the space in which the filler wire is inserted is small, and it is therefore difficult to install equipment. In contrast, when the electrode distance exceeds 35 mm, the bead shape overlaps, the molten pool becomes small, and the melting behavior of the filler wire becomes unstable. Hence, the electrode distance is set at 20 to 35 mm.

(4) Leading-electrode backward angle $\alpha$: 4° to 14°, preferably, 7° to 13°

When the leading-electrode backward angle $\alpha$ is less than 4°, stability of the molten pool decreases. Further, since the torch distance decreases, it is difficult to install equipment for the welding method. In contrast, when the leading-electrode backward angle $\alpha$ exceeds 14°, the bead becomes convex. Accordingly, the leading-electrode backward angle $\alpha$ is set at 4° to 14°, preferably, 7° to 13°.

(5) Trailing-electrode forward angle $\beta$: 5° to 15°, preferably, 10° to 13°

When the trailing-electrode forward angle $\beta$ is less than 5°, stability of the molten pool decreases, and the bead becomes convex. In contrast, when the trailing-electrode forward angle $\beta$ exceeds 15°, undercuts easily occur, and this impairs the bead appearance. Accordingly, the trailing-electrode forward angle $\beta$ is set at 5° to 15°, preferably, 10° to 13°.

(6) Filler-wire torch forward or backward Angle $\gamma$: -5° to 5° (backward 5° to forward 5°)

When the filler-wire torch forward or backward angle $\gamma$ is a backward angle and the backward angle exceeds 5°, stability of the molten pool decreases, the sputtering amount increases, and it is difficult to install equipment for the welding method. In contrast, when the filler-wire torch forward or backward angle $\gamma$ is a forward angle and the forward angle exceeds 5°, similarly, stability of the molten pool decreases, the sputtering amount increases, and it is difficult to install equipment for the welding method. Accordingly, the filler-wire torch forward or backward angle $\gamma$ is set at -5° to 5° (backward 5° to forward 5°). More preferably, the filler-wire torch forward or backward angle $\gamma$ is 0°, that is, the filler wire is perpendicular to the welding direction. When the filler-wire torch forward or backward angle $\gamma$ is 0° and the filler wire is placed at an equal distance from the leading electrode and the trailing electrode in this way, the effect of reducing interference between magnetic fields produced by the electrodes can be enhanced.

Examples

Examples of the present invention will now be described in comparison with comparative examples that are not included in the scope of the invention. Table 1 shows welding test conditions, and Table 2 shows criteria of characteristic evaluation.

Table 1

| Welding position | Two-electrode horizontal fillet welding |
|---|---|
| Wire diameter of leading electrode and trailing electrode | 1.6 mm (JIS Z3313 T49J0T1-0CA-U used) |
| Filler wire diameter | 1.2 mm (YGW17 used) |
| Wire protrusion length | Leading and trailing electrodes: 2.5 mm Filler wire: 20 mm |
| Wire polarity | Leading and trailing electrodes: DCEP (wire plus) Filler wire: DCEN (wire minus) |
| Torch angle | Leading and trailing electrodes: 20 to 80° Filler wire: 0 to 90° |
| Forward and backward angles | Leading electrode: backward angle 0 to 15° Trailing electrode: forward angle 0 to 15° |
| Target position | Leading electrode: 0 mm, trailing electrode: 2.5 mm on lower plate |
| Electrode distance | 10 to 40 mm |
| Welding speed | 100, 150, 200 (cm/min) |
| Shield gas | 100%$CO_2$, 25 1/min |
| Test steel plate and joint shape | A T-shaped fillet joint was formed by a steel plate having a thickness of 12 mm, a width of 100 mm, and a length of 1000 mm. The primer film thickness is 30 $\mu$m. |

Notes:
(1) JIS Z3313 T49JOT1-OCA-U and YGW17 indicate the types of welding wires specified in the Japanese Industrial Standards (JIS). JIS Z3313 T49JOT1-OCA-U is a kind of flux-cored wire, and YGW17 is a kind of solid wire.
(2) DCEP = Direct Current Electrode Positive DCEN = Direct Current Electrode Negative
(3) In the column of the target position, "leading electrode: 0 mm, trailing electrode: 2.5 mm" means that the target position of the leading electrode is a corner portion defined by the vertical plate and the lower plate and the target position of the trailing electrode is a position shifted by 2.5 mm from the corner portion to the right on the lower plate, as shown in Fig. 2.

Table 2

| Evaluation rank | H/L (shape evaluation) | Number of irregular portions + number of undercuts | Amount of sputtering (g/min) | Number of pits (per 1000 mm) | Installation of equipment |
|---|---|---|---|---|---|
| 5 | ~0.12 | 0 | ~0.8 | 0 | Easy |
| 4 | 0.12~0.14 | 1~2 | 0.8~1.5 | 1~2 | |
| 3 | 0.14~0.18 | 3 | 1.5~2.0 | 3 | |
| 2 | 0.18~ | 4~6 | 2.0~2.5 | 4~6 | Difficult |
| 1 | Nonuniform bead shape | 7 or more or more. | 2.5~ | 7~ | |

The upper leg length was measured with a leg length gauge.

The bead shape was evaluated on the basis of the ratio of a height H of a convex portion of a bead from a line segment linking an outer portion of the bead on the lower plate 1 and an outer portion of the bead on the vertical plate 2 to a length L of the segment, that is, H/L in Fig. 4 showing the bead shape. In other words, the bead shape improves as H/L decreases. In this case, Ranks 5 to 2 of evaluation indicate that uniformity of the bead shape in the longitudinal direction is maintained even when the bead shape is poor. Rank 1 indicates that uniformity of the bead shape in the longitudinal direction is impaired.

The bead appearance was evaluated on the basis of the sum of the number of irregular portions and the number of undercuts (per 1000 mm). Sputtering was evaluated on the basis of the sputtering amount. Further, the resistance to porosity was evaluated on the basis of the number of pits (per 1000 mm) produced on one side in a porosity resistance test, more specifically, on the basis of the number of pits in one of the two beads formed on both sides of the vertical plate that has more pits. In these cases, the length of 1000 mm is the welding length.

Ranks 3 to 5 indicate that the evaluation result is good. Ranks 1 and 2 indicate that the evaluation result is poor. When a sufficient space in which the filler wire is inserted can be ensured, it is determined that installation of equipment is easy. When a sufficient space is not ensured, it is determined that installation of equipment is difficult.

The following Tables 3-1 to 3-6 show welding conditions of examples and comparative examples. The following Tables 4-1 and 4-2 show the evaluation results of obtained characteristics.

Table 3-1

| | Sample No. | Welding speed (cm/min) | Welding conditions | | | |
| | | | Leading electrode | | Trailing electrode | |
| | | | Current (A) | Arc voltage (V) | Current (A) | Arc voltage (V) |
|---|---|---|---|---|---|---|
| Comparative Example | 1 | 200 | 560 | 40 | 470 | 40 |
| | 2 | 200 | 560 | 40 | 470 | 40 |
| | 3 | 100 | 450 | 37 | 400 | 35 |
| | 4 | 100 | 450 | 37 | 400 | 35 |
| | 5 | 150 | 480 | 38 | 420 | 35 |
| | 6 | 150 | 480 | 38 | 420 | 35 |
| | 7 | 200 | 520 | 38 | 450 | 36 |
| | 8 | 200 | 520 | 38 | 450 | 36 |
| | 9 | 150 | 470 | 38 | 400 | 35 |
| | 10 | 150 | 470 | 38 | 400 | 35 |
| | 11 | 150 | 470 | 38 | 400 | 35 |
| | 12 | 150 | 470 | 38 | 400 | 35 |
| | 13 | 150 | 480 | 38 | 420 | 37 |
| | 14 | 150 | 460 | 36 | 400 | 35 |
| | 15 | 200 | 500 | 37 | 420 | 35 |
| | 16 | 200 | 500 | 37 | 420 | 35 |
| | 17 | 150 | 480 | 38 | 420 | 37 |
| | 18 | 150 | 460 | 36 | 400 | 35 |

Table 3-2

| | Sample No. | Torch angle, forward or backward angle, target position | | | | |
|---|---|---|---|---|---|---|
| | | Leading electrode torch | | Trailing electrode torch | | Filler wire forward or backward angle |
| | | Backward angle (°) | Horizontal angle (°) | Forward angle (°) | Horizontal angle (°) | |
| | | 4~14 | 40~60 | 5~15 | 40~60 | Backward 5°-forward 5° |
| Comparative Example | 1 | 2 | 45 | 7 | 50 | 0 |
| | 2 | 15 | 45 | 7 | 50 | 0 |
| | 3 | 7 | 50 | 4 | 42 | 0 |
| | 4 | 7 | 50 | 20 | 42 | 0 |
| | 5 | 10 | 35 | 13 | 58 | 0 |
| | 6 | 10 | 70 | 13 | 58 | Backward 2° |
| | 7 | 10 | 42 | 13 | 38 | Forward 2° |
| | 8 | 10 | 42 | 13 | 65 | Backward 1° |
| | 9 | 8 | 47 | 11 | 55 | 0 |
| | 10 | 8 | 47 | 11 | 50 | 0 |
| | 11 | 4 | 53 | 15 | 57 | Backward 2° |
| | 12 | 4 | 53 | 15 | 57 | Backward 1° |
| | 13 | 7 | 50 | 12 | 50 | Forward 3° |
| | 14 | 8 | 53 | 15 | 45 | Backward 4° |
| | 15 | 9 | 57 | 8 | 45 | 0 |
| | 16 | 9 | 57 | 8 | 45 | 0 |
| | 17 | 7 | 50 | 12 | 50 | Backward 6° |
| | 18 | 8 | 53 | 15 | 45 | Forward 7° |

Table 3-3

| | Sample No. | Torch angle, forward or backward angle, target position | | | | |
|---|---|---|---|---|---|---|
| | | Filler wire horizontal angle range (°) | Filler wire torch angle (°) | Upper leg length (mm) | Filler wire target position range (mm) 0 to (upper leg length-2) | Filler wire target position (mm) |
| Comparative Example | 1 | 25-40 or 55-70 | 60 | 5.7 | 0~3.7 | 2.5 |
| | 2 | 25-40 or 55-70 | 60 | 5.6 | 0~3.6 | 1.0 |
| | 3 | 22-37 or 55-70 | 28 | 7.5 | 0~5.5 | 4.5 |
| | 4 | 22-37 or 55-70 | 28 | 7.6 | 0-5.6 | 5.0 |
| | 5 | - | 65 | 6.0 | 0~4.0 | 3.5 |
| | 6 | - | 65 | 5.8 | 0~3.8 | 3.0 |
| | 7 | - | 25 | 5.5 | 0~3.5 | 2.5 |
| | 8 | - | 25 | 5.6 | 0~3.6 | 2.5 |
| | 9 | 27-42 or 60-75 | 53 | 5.5 | 0~3.5 | 1.0 |
| | 10 | 27-42 or 55-70 | 47 | 5.4 | 0-3.4 | 0.5 |
| | 11 | 33-48 or 62-77 | 15 | 5.6 | 0~3.6 | 3.0 |
| | 12 | 33-48 or 62-77 | 87 | 5.5 | 0~3.5 | 2.5 |
| | 13 | 30-45 or 55-70 | 63 | 5.8 | 0~3.8 | 4.0 |
| | 14 | 25-40 or 58-73 | 60 | 5.7 | 0~3.7 | Lower plate side 1.0 |
| | 15 | 25-40 or 62-77 | 37 | 5.4 | 0~3.4 | 2.5 |
| | 16 | 25-40 or 62-77 | 37 | 5.3 | 0~3.3 | 1.5 |
| | 17 | 30-45 or 55-70 | 35 | 5.8 | 0~3.8 | 2.5 |
| | 18 | 25-40 or 58-73 | 38 | 5.6 | 0~3.6 | 2.8 |

Table 3-4

| | Sample No. | Welding speed (cm/min) | Welding Conditions | | | |
|---|---|---|---|---|---|---|
| | | | Leading electrode | | Trailing electrode | |
| | | | Current (A) | Arc voltage (V) | Current (A) | Arc voltage (V) |
| Example | 1 | 200 | 470 | 38 | 400 | 35 |
| | 2 | 200 | 470 | 38 | 400 | 35 |
| | 3 | 200 | 470 | 38 | 400 | 35 |
| | 4 | 200 | 450 | 37 | 380 | 33 |
| | 5 | 150 | 450 | 37 | 380 | 33 |
| | 6 | 150 | 520 | 38 | 450 | 36 |
| | 7 | 150 | 520 | 38 | 450 | 36 |
| | 8 | 150 | 520 | 38 | 450 | 36 |
| | 9 | 100 | 520 | 38 | 450 | 36 |
| | 10 | 200 | 480 | 36 | 430 | 35 |
| | 11 | 200 | 480 | 36 | 430 | 35 |
| | 12 | 150 | 480 | 36 | 430 | 35 |
| | 13 | 150 | 450 | 35 | 400 | 33 |
| | 14 | 200 | 450 | 35 | 400 | 33 |

Table 3-5

| | Sample No. | Torch angle, forward or backward angle, target position | | | | |
|---|---|---|---|---|---|---|
| | | Leading electrode | | Trailing electrode | | Filler wire forward or backward angle (°) |
| | | Backward angle (°) | Horizontal angle (°) | Forward angle (°) | Horizontal angle (°) | |
| | | 4~14 | 40~60 | 5~15 | 40~60 | Backward 5° to forward 5° |
| Example | 1 | 7 | 45 | 13 | 50 | Backward 2° |
| | 2 | 6 | 45 | 13 | 50 | Forward 1° |
| | 3 | 7 | 50 | 10 | 42 | 0 |
| | 4 | 7 | 50 | 12 | 42 | 0 |
| | 5 | 10 | 42 | 13 | 58 | 0 |
| | 6 | 10 | 58 | 13 | 58 | 0 |
| | 7 | 10 | 42 | 13 | 48 | Backward 3° |
| | 8 | 10 | 42 | 13 | 57 | Forward 4° |
| | 9 | 8 | 47 | 11 | 55 | Backward 5° |
| | 10 | 8 | 47 | 11 | 50 | 0 |
| | 11 | 4 | 53 | 15 | 57 | 0 |
| | 12 | 4 | 53 | 15 | 57 | 0 |
| | 13 | 9 | 57 | 8 | 45 | 0 |
| | 14 | 9 | 57 | 8 | 45 | 0 |

Table 3-6

| | Sample No. | Torch angle, forward or backward angle, target position | | | | |
| | | Filler wire horizontal angle range (°) | Filler wire torch angle (°) | Upper leg length (mm) | Filler wire target position range (mm) 0 to (upper leg lenqth-2) | Filler wire target position (mm) |
|---|---|---|---|---|---|---|
| Example | 1 | 25-40 or 55-70 | 60 | 5.0 | 0~3.0 | 1.5 |
| | 2 | 25-40 or 55-70 | 60 | 4.9 | 0~2.9 | 2.0 |
| | 3 | 22-37 or 55-70 | 28 | 5.1 | 0~3.1 | 3.0 |
| | 4 | 22-37 or 55-70 | 28 | 4.5 | 0~2.5 | 2.0 |
| | 5 | 22-38 or 63-78 | 65 | 5.7 | 0~3.7 | 3.0 |
| | 6 | 38-53 or 63-78 | 65 | 6.9 | 0~4.9 | 2.0 |
| | 7 | 22-37 or 53-68 | 25 | 7.1 | 0~5.1 | 4.0 |
| | 8 | 22-37 or 62-77 | 25 | 7.1 | 0~5.1 | 4.5 |
| | 9 | 27-42 or 60-75 | 65 | 7.3 | 0~5.3 | 3.5 |
| | 10 | 27-42 or 55-70 | 70 | 5.1 | 0~3.1 | 2.0 |
| | 11 | 33-48 or 62-77 | 40 | 4.8 | 0~2.8 | 1.5 |
| | 12 | 33-48 or 62-77 | 35 | 5.7 | 0~3.7 | 2.5 |
| | 13 | 25-40 or 62-77 | 37 | 5.5 | 0~3.5 | 2.5 |
| | 14 | 25-40 or 62-77 | 37 | 4.6 | 0~2.6 | 1.0 |

Table 4-1

| | Sample No. | Electrode distance 20~35 | Evaluation | | | | |
|---|---|---|---|---|---|---|---|
| | | | Bead shape | Bead appearance | Sputtering | Porosity resistance | Installation of equipment |
| Comparative example | 1 | 28 | 5 | 2 | 5 | 5 | Difficult |
| | 2 | 28 | 2 | 3 | 5 | 4 | Easy |
| | 3 | 30 | 2 | 1 | 3 | 5 | Easy |
| | 4 | 30 | 5 | 1 | 3 | 4 | Easy |
| | 5 | 25 | 3 | 2 | 1 | 4 | Easy |
| | 6 | 25 | 4 | 1 | 3 | 4 | Easy |
| | 7 | 32 | 3 | 2 | 1 | 4 | Easy |
| | 8 | 32 | 3 | 2 | 4 | 4 | Easy |
| | 9 | 28 | 5 | 5 | 5 | 5 | Difficult |
| | 10 | 28 | 5 | 5 | 5 | 5 | Difficult |
| | 11 | 28 | 3 | 2 | 3 | 4 | Easy |
| | 12 | 28 | 3 | 2 | 3 | 4 | Easy |
| | 13 | 25 | 3 | 2 | 2 | 2 | Easy |
| | 14 | 26 | 2 | 4 | 3 | 3 | Easy |
| | 15 | 18 | 4 | 3 | 2 | 1 | Difficult |
| | 16 | 42 | 2 | 2 | 3 | 5 | Easy |
| | 17 | 28 | 2 | 2 | 1 | 2 | Difficult |
| | 18 | 24 | 3 | 3 | 1 | 2 | Difficult |

Table 4-2

| | Sample . No. | Electrode distance (mm) | Evaluation | | | | |
|---|---|---|---|---|---|---|---|
| | | 20~35 | Bead shape | Bead appearance | Sputtering | Porosity resistance | Installation of equipment |
| Example | 1 | 25 | 5 | 5 | 5 | 5 | Easy |
| | 2 | 25 | 5 | 5 | 5 | 5 | Easy |
| | 3 | 30 | 5 | 5 | 5 | 5 | Easy |
| | 4 | 30 | 5 | 5 | 5 | 5 | Easy |
| | 5 | 25 | 4 | 5 | 5 | 5 | Easy |
| | 6 | 25 | 4 | 5 | 5 | 5 | Easy |
| | 7 | 32 | 4 | 5 | 5 | 5 | Easy |
| | 8 | 32 | 4 | 5 | 4 | 5 | Easy |
| | 9 | 28 | 5 | 5 | 4 | 5 | Easy |
| | 10 | 28 | 5 | 5 | 5 | 5 | Easy |
| | 11 | 28 | 5 | 4 | 5 | 5 | Easy |
| | 12 | 28 | 5 | 4 | 5 | 5 | Easy |
| | 13 | 23 | 5 | 5 | 5 | 4 | Easy |
| | 14 | 33 | 4 | 5 | 5 | 5 | Easy |

As shown in Tables 4-1 and 4-2, Examples 1 to 14 were evaluated as Rank 4 or 5, and installation of equipment was possible. In contrast, in Comparative Examples 1 to 18, any of the characteristics was evaluated as Rank 1, 2, or 3, and installation of equipment was difficult.

**Claims**

1.　A multielectrode gas-shielded arc welding method for a fillet between a lower plate (1) placed horizontally and a vertical plat (2) perpendicularly placed on the lower plate (1),
wherein a leading electrode and a trailing electrode are each formed by a flux cored wire for gas-shielded arc welding,
wherein an electrode distance between the leading electrode and the trailing electrode is set at 20 to 35 mm,
**characterised in that** a filler wire is supplied between the leading electrode and the trailing electrode following the leading electrode, wherein variables L, T, F, X, Y, $\alpha$, $\beta$, and $\gamma$ satisfy the following expressions:

$$40° \leq L \leq 60°$$

$$40° \leq T \leq 60°$$

$$X+5° \leq F \leq X+20° \text{ or } Y-20° \leq F \leq Y-5°$$

$$4° \leq \alpha \leq 14°$$

$$5° \leq \beta \leq 15°$$

$$-5° \leq \gamma \leq 5°$$

where L represents a leading-electrode horizontal angle between the leading electrode and a horizontal direction, T represents a trailing-electrode horizontal angle between the trailing electrode and the horizontal direction, X represents the larger one of L and T, Y represents the smaller one of L and T, F represents a filler-wire torch angle between the filler wire and the horizontal direction, $\alpha$ represents a leading-electrode backward angle at which a leading end of the leading electrode points backward in a welding direction in plan view, $\beta$ represents a trailing-electrode forward angle at which a leading end of the trailing electrode points forward in the welding direction in plan view, $\gamma$ represents a filler-wire torch forward or backward angle at which a leading end of the filler wire points backward or forward in the welding direction in plan view and which is formed between the filler wire and a direction perpendicular to the welding direction, the filler-wire torch forward or backward angle $\gamma$ being one of a negative angle serving as a backward angle in the welding direction or a positive angle serving as a forward angle in the welding direction, and

wherein a wire target position of the filler wire is within a range between a lower end of the vertical plate (2) and a position at a height from the lower end, the height being obtained by subtracting 2 mm from an upper leg length.

2. The multielectrode gas-shielded arc welding method according to claim 1, wherein the filler-wire torch forward or backward angle $\gamma$ is 0°.

**Patentansprüche**

1. Mehrelektroden-Schutzgaslichtbogenschweißverfahren für eine Kehlnaht zwischen einer unteren Platte (1), die horizontal angeordnet ist, und einer vertikalen Platte (2), die senkrecht auf der unteren Platte (1) angeordnet ist, wobei eine Führungselektrode und eine Nachlaufelektrode jeweils durch einen Draht mit Flussmittelkern zum Schutzgaslichtbogenschweißen ausgebildet sind, wobei ein Elektrodenabstand zwischen der Führungselektrode und der Nachlaufelektrode auf 20 bis 35 mm eingestellt ist,

**dadurch gekennzeichnet, dass**

ein Fülldraht zwischen der Führungselektrode und der Nachlaufelektrode, die der Führungselektrode folgt, zugeführt wird, wobei Variablen L, T, F, X, Y, $\alpha$, $\beta$ und $\gamma$ den folgenden Ausdrücken genügen:

$$40° \leq L \leq 60°$$

$$40° \leq T \leq 60°$$

$$X + 5° \leq F \leq X + 20° \text{ oder } Y - 20° \leq F \leq Y - 5°$$

$$4° \leq \alpha \leq 14°$$

$$5° \leq \beta \leq 15°$$

$$-5° \leq \gamma \leq 5°$$

wobei L einen Führungselektrode-Horizontalwinkel zwischen der Führungselektrode und einer horizontalen Richtung darstellt, T einen Nachlaufelektrode-Horizontalwinkel zwischen der Nachlaufelektrode und der horizontalen Richtung darstellt, X den größeren von L und T darstellt, Y den kleineren von L und T darstellt, F einen Fülldraht-Brennerwinkel zwischen dem Fülldraht und der horizontalen Richtung darstellt, $\alpha$ einen Führungselektrode-Rückwärtswinkel darstellt, um den ein Führungsende der Führungselektrode in einer Schweißrichtung in der Draufsicht nach hinten zeigt, $\beta$ einen Nachlaufelektrode-Vorwärtswinkel darstellt, um den ein Führungsende der Nachlaufelektrode in der Schweißrichtung in der Draufsicht nach vorne zeigt, γ einen Fülldraht-Brenner-Vonrvärts- oder -Rückwärtswinkel darstellt, um den ein Führungsende des Fülldrahts in der Schweißrichtung in der Draufsicht nach hinten oder vorne zeigt und der zwischen dem Fülldraht und einer Richtung senkrecht zur Schweißrichtung vorliegt, wobei es sich bei dem Fülldraht-Brenner-Vorwärts- oder -Rückwärtswinkel γ um einen von einem negativen Winkel, der als Rückwärtswinkel in der Schweißrichtung dient, oder einem positiven Winkel, der als Vorwärtswinkel in der Schweißrichtung dient, handelt, und

wobei eine Drahtzielposition des Fülldrahts innerhalb eines Bereichs zwischen einem unteren Ende der vertikalen Platte (2) und einer Position bei einer Höhe von dem unteren Ende liegt, wobei die Höhe durch Subtrahieren von 2 mm von einer Länge eines oberen Schenkels erhalten wird.

2. Mehrelektroden-Schutzgaslichtbogenschweißverfahren nach Anspruch 1, bei dem der Fülldraht-Brenner-Vorwärts- oder -Rückwärtswinkel γ 0° beträgt.

## Revendications

1. Une méthode de soudure à l'arc sous protection gazeuse avec multi-électrodes pour un clin entre une plaque inférieure (1) placée horizontalement et une plaque verticale (2) placée perpendiculairement sur la plaque inférieure (1),

   dans laquelle une électrode de tête et une électrode suiveuse sont formées chacune par un fil à flux incorporé pour la soudure à l'arc sous protection gazeuse,

   dans laquelle la distance entre électrodes entre l'électrode de tête et l'électrode suiveuse est fixée de 20 à 35 mm, **caractérisée en ce qu'**un fil d'apport est fourni entre l'électrode de tête et l'électrode suiveuse qui suit l'électrode de tête ,

   dans laquelle les variables L, T, F, X, Y, α, β et γ satisfont aux expressions suivantes :

$$40° \leq L \leq 60°$$

$$40° \leq T \leq 60°$$

$$X+5° \leq F \leq X+20° \quad \text{ou} \quad Y-20° \leq F \leq Y-5°$$

$$4° \leq \alpha \leq 14°$$

$$5° \leq \beta \leq 15°$$

$$-5° \leq \gamma \leq 5°$$

   où L représente un angle horizontal de l'électrode de tête entre l'électrode de tête et une direction horizontale, T représente un angle horizontal de l'électrode suiveuse entre l'électrode suiveuse et la direction horizontale, X représente le plus grand de L et T, Y représente le plus petit de L et T, F représente un angle de torche à fil d'apport entre le fil d'apport et la direction horizontale, α représente un angle arrière de l'électrode de tête auquel une extrémité avant de l'électrode de tête pointe vers l'arrière dans une direction de la soudure en vue de dessus, β représente un angle avant de l'électrode suiveuse auquel une extrémité avant de l'électrode suiveuse pointe vers l'avant dans la direction de la soudure en vue de dessus, γ représente un angle de torche à fil d'apport avant ou arrière auquel l'extrémité avant du fil d'apport pointe vers l'arrière ou vers l'avant dans la direction de la soudure en vue du dessus et qui est formé entre le fil d'apport et une direction perpendiculaire à la direction de la soudure, l'angle de torche à fil d'apport avant ou arrière γ étant un angle négatif servant d'angle arrière dans la direction de la soudure ou un angle positif servant d'angle avant dans la direction de la soudure, et

   dans laquelle une position cible du fil d'apport se situe dans une zone entre une extrémité inférieure et la plaque verticale (2) et une position à une hauteur à partir de l'extrémité inférieure, la hauteur étant obtenue en soustrayant 2 mm de la longueur d'un pas supérieur.

2. La méthode de soudure à l'arc sous protection gazeuse avec multi-électrodes selon la revendication 1, dans laquelle l'angle de torche à fil d'apport avant ou arrière $\gamma$ est de 0°,

# FIG. 1

# FIG. 2

## FIG. 3

## FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8309582 A

- JP 3759114 B